# DEMANDE DE BREVET EUROPEEN

(11) **EP 3 736 957 A1**
(43) Date de publication de la demande: **11.11.2020**
(21) Numéro de dépôt: 20173346.6
(22) Date de dépôt: 06.05.2020
(51) Int. Cl.: H02M 1/32, H02H 9/02, H02H 9/04, H02M 7/04

(54) **CIRCUIT D'ALIMENTATION CAPACITIVE**

(30) Priorité: 10.05.2019 FR 1904879
(71) Demandeur: Commissariat à l'Energie Atomique et aux Energies Alternatives, 75015 Paris (FR)
(72) Inventeur: DESPESSE, Ghislain, 38054 GRENOBLE CEDEX 09 (FR)
(74) Mandataire: Cabinet Beaumont

(57) **Abrégé**

La présente description concerne un circuit d'alimentation capacitive comportant, entre des première (Al) et deuxième (A2) bornes d'application d'une tension alternative d'entrée (UIN), une structure capacitive distribuée (D-C1) comportant une pluralité de modules capacitifs élémentaires (Mi) comportant chacun un limiteur de courant (201) connecté en série avec un condensateur (Clelem) entre des première (n1) et deuxième (n2) bornes du module et un limiteur de tension (203) connecté en parallèle du condensateur (Clelem), les modules capacitifs élémentaires (Mi) étant reliés en série par leurs premières (n1) et deuxièmes (n2) bornes.

## Description

### Domaine technique

La présente description concerne de façon générale les circuits électroniques et, plus particulièrement, les circuits de génération d'une tension continue à partir d'une tension alternative. L'invention s'applique plus particulièrement aux circuits d'alimentation capacitive.

### Technique antérieure

Les circuits d'alimentation capacitive sont largement utilisés dans l'industrie électronique et servent à générer une tension d'alimentation continue à partir d'une tension alternative. De tels circuits d'alimentation comprennent classiquement un condensateur en série avec un module de conversion de sortie entre des bornes d'application de la tension alternative d'entrée.

Il serait souhaitable d'améliorer au moins en partie certains aspects des circuits d'alimentation capacitive connus.

### Résumé de l'invention

Pour cela, un mode de réalisation prévoit un circuit d'alimentation capacitive comportant, entre des première et deuxième bornes d'application d'une tension alternative d'entrée, une structure capacitive distribuée comportant une pluralité de modules capacitifs élémentaires comportant chacun un limiteur de courant connecté en série avec un condensateur entre des première et deuxième bornes du module et un limiteur de tension connecté en parallèle du condensateur, les modules capacitifs élémentaires étant reliés en série par leurs premières et deuxièmes bornes.

Selon un mode de réalisation, le circuit d'alimentation capacitive comporte en outre un module de conversion de sortie en série avec la structure capacitive distribuée entre les première et deuxième bornes d'application de la tension alternative d'entrée.

Selon un mode de réalisation, la distance entre les condensateurs de modules capacitifs élémentaires voisins est supérieure ou égale à 1 cm, la distance entre les limiteurs de courant de modules capacitifs élémentaires voisins est supérieure ou égale à 1 cm, et la distance entre les limiteurs de tension de modules capacitifs élémentaires voisins est supérieure ou égale à 1 cm.

Selon un mode de réalisation, dans chaque module capacitif élémentaire, le limiteur de tension présente un seuil de déclenchement compris entre 10 et 40 % de l'amplitude nominale de la tension alternative d'entrée.

Selon un mode de réalisation, dans chaque module capacitif élémentaire, le limiteur de courant se déclenche lorsque le courant qui le traverse dépasse un seuil prédéterminé.

Selon un mode de réalisation, dans chaque module capacitif élémentaire, le limiteur de courant est déclenché via un signal de commande généré par le limiteur de tension.

Selon un mode de réalisation, dans chaque module capacitif élémentaire, le limiteur de courant est bidirectionnel en courant et le limiteur de tension est bidirectionnel en tension.

Selon un mode de réalisation, dans chaque module capacitif élémentaire, le limiteur de tension comprend :
- une varistance, par exemple une varistance métal-oxyde, par exemple une varistance zinc-oxyde ; ou
- une association série de deux diodes Zener tête bêche ; ou
- un montage à transistors ; ou
- un éclateur.

Selon un mode de réalisation, dans chaque module capacitif élémentaire, le limiteur de tension comprend :
- une thermo-résistance ou une thermistance ;
- un fusible réarmable ; ou
- un montage à transistors.

Selon un mode de réalisation, dans chaque module capacitif élémentaire, le limiteur de courant comprend une première branche comportant un premier transistor bipolaire et une première résistance en série entre des première et deuxième bornes de conduction du limiteur de courant, et, en parallèle de la première branche, une deuxième branche comportant une deuxième résistance et un deuxième transistor bipolaire en série entre les première et deuxième bornes de conduction du limiteur de courant, les premier et deuxième transistors bipolaires étant de même type de conductivité, le premier transistor ayant un noeud de commande relié au point milieu entre la deuxième résistance et le deuxième transistor, et le deuxième transistor ayant un noeud de commande relié au point milieu entre le premier transistor et la première résistance.

Selon un mode de réalisation, dans chaque module capacitif élémentaire, le limiteur de courant comprend des premier et deuxième transistors bipolaires de types de conductivité opposés connectés en série entre des première et deuxième bornes de conduction du limiteur de courant, le premier transistor ayant une borne de commande connectée à une borne de commande du deuxième transistor, les bornes de commande des premier et deuxième transistors étant reliées d'une part à une borne de commande du limiteur de courant par l'intermédiaire d'une première résistance et d'autre part à la première borne de conduction du limiteur de courant par l'intermédiaire d'une deuxième résistance.

Selon un mode de réalisation, dans chaque module capacitif élémentaire, le limiteur de tension comprend des première et deuxième varistances en série entre des première et deuxième électrodes du condensateur, le point milieu entre les première et deuxième varistances étant connecté à la borne de commande du limiteur de courant.

Selon un mode de réalisation, chaque module capacitif élémentaire est constitué de trois composants discrets correspondant respectivement au condensateur, au limiteur de courant, et au limiteur de tension, les modules capacitifs élémentaires étant agencés sous forme linéique de façon que les condensateurs de deux modules capacitifs élémentaires voisins quelconques soient séparés par le limiteur de courant de l'un des deux modules, et de façon que les limiteurs de tension de deux modules capacitifs élémentaires voisins quelconques soient séparés par le limiteur de courant de l'un des deux modules.

Selon un mode de réalisation, les modules capacitifs élémentaires sont disposés dans une même gaine isolante de protection.

Selon un mode de réalisation, la structure capacitive distribuée comprend une pluralité d'isolateurs comprenant chacun une galette en un matériau isolant, une première pièce métallique d'accroche fixée à une première face de la galette, et une deuxième pièce métallique d'accroche fixée à une deuxième face de la galette, les isolateurs étant reliés en série par leurs première et deuxième pièces métalliques d'accroche, et chaque module capacitif élémentaire étant disposé dans une cavité formée dans la galette de l'un des isolateurs et ayant ses première et deuxième bornes en contact respectivement avec les première et deuxième pièces métalliques d'accroche de l'isolateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est un schéma électrique simplifié d'un exemple d'un circuit d'alimentation capacitive ;

la figure 2 est un schéma électrique simplifié d'un exemple d'un circuit d'alimentation capacitive selon un mode de réalisation ;

la figure 3 est un schéma électrique d'un exemple de réalisation d'un limiteur de courant du circuit d'alimentation capacitive de la figure 2 ;

la figure 4 est un schéma électrique d'un exemple de réalisation d'un module capacitif élémentaire du circuit d'alimentation capacitive de la figure 2 ;

la figure 5 est un schéma électrique d'un autre exemple de réalisation d'un module capacitif élémentaire du circuit d'alimentation capacitive de la figure 2 ;

la figure 6 est un schéma électrique simplifié d'un exemple de réalisation d'un module de conversion de sortie du circuit d'alimentation capacitive de la figure 2 ;

la figure 7 est une vue en perspective illustrant schématiquement un exemple d'implémentation d'une structure capacitive distribuée du circuit d'alimentation de la figure 2 ; et

la figure 8 est une vue en perspective illustrant schématiquement un autre exemple d'implémentation d'une structure capacitive distribuée du circuit d'alimentation de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, l'exploitation faite de la tension continue générée par le circuit d'alimentation capacitive n'a pas été détaillée, les modes de réalisation décrits étant compatibles avec les applications usuelles de circuits d'alimentation capacitive.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

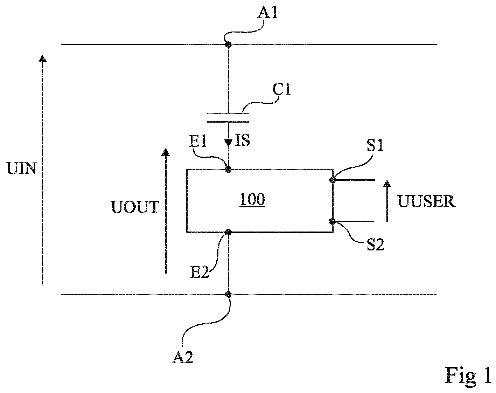

La figure 1 est un schéma électrique simplifié d'un exemple d'un circuit d'alimentation capacitive.

Le circuit de la figure 1 comprend un condensateur C1 en série avec un module de conversion de sortie 100 entre des bornes ou rails A1 et A2 d'application d'une tension alternative d'entrée UIN. Dans l'exemple de la figure 1, le condensateur C1 a une première électrode reliée, par exemple connectée, à la borne A1, et une deuxième électrode reliée, par exemple connectée, à une première borne d'entrée E1 du module de conversion de sortie 100. Le module de conversion de sortie 100 comprend en outre une deuxième borne d'entrée E2 reliée, par exemple connectée, à la borne A2.

Le rôle du condensateur C1 est de limiter le courant IS fourni au module de conversion de sortie 100. Le module de conversion de sortie 100 voit entre ses bornes d'entrée E1 et E2 une tension UOUT qui correspond à la différence entre la tension d'entrée UIN et la tension aux bornes du condensateur C1. En fonctionnement, le module 100 délivre, entre des première et deuxième bornes de sortie S1 et S2, une tension continue de sortie UUSER destinée à l'alimentation d'une charge, non représentée.

Le schéma électrique du module de conversion de sortie 100 n'a pas été détaillé, les modes de réalisation décrits étant compatibles avec tous ou la plupart des modules de conversion de sortie de circuits d'alimentation capacitive connus. A titre d'exemple, le module 100 peut comprendre un transformateur abaisseur comportant un enroulement primaire connecté entre les bornes E1 et E2 et un enroulement secondaire couplé par couplage électromagnétique à l'enroulement secondaire, et un circuit de redressement et de filtrage ayant des bornes d'entrée connectées respectivement aux bornes de l'enroulement secondaire du transformateur et des bornes de sortie connectées respectivement aux bornes S1 et S2. A titre de variante, le module 100 comprend un circuit d'alimentation à découpage comportant des bornes d'entrée connectées respectivement aux bornes E1 et E2 et des bornes de sortie connectées respectivement aux bornes S1 et S2. Dans une autre variante, le module 100 comprend un circuit de redressement et de filtrage ayant des bornes d'entrée directement connectées respectivement aux bornes E1 et E2 et des bornes de sortie connectées respectivement aux bornes S1 et S2.

Une difficulté qui se pose dans le circuit d'alimentation capacitive de la figure 1 est que le condensateur C1 doit pouvoir supporter sans dégradation des tensions élevées. En effet, la tension UOUT aux bornes du module de conversion de sortie 100 peut être faible devant la tension d'entrée UIN, par exemple inférieure au cinquième de l'amplitude nominale UIN_NOM de la tension UIN, d'où il résulte que le condensateur C1 voit à ses bornes une tension de l'ordre de la tension UIN. En outre, la tension UIN peut être sujette à des pics parasites de surtension, pouvant par exemple atteindre plus de deux fois l'amplitude nominale UIN_NOM de la tension UIN. Le condensateur C1 doit pouvoir encaisser ces pics de surtension sans dégradation.

Le coût et l'encombrement du condensateur C1 peuvent donc être significatifs, notamment dans des applications dans lesquelles on souhaite alimenter des charges à des tensions relativement faibles, par exemple inférieures à 50 volts, directement à partir de lignes à haute tension, par exemple à partir d'une tension UIN d'amplitude nominale UIN-NOM supérieure à 10000 volts, par exemple de l'ordre de 100000 volts.

On notera en particulier qu'augmenter la tenue en tension du condensateur C1 d'un facteur n revient sensiblement à multiplier par n l'épaisseur de diélectrique du condensateur, et donc à multiplier également par n la surface du condensateur pour maintenir sa capacité inchangée. Autrement dit, augmenter la tenue en tension du condensateur C1 d'un facteur n revient à augmenter son volume d'un facteur n². Dimensionner le condensateur C1 pour résister aux pics de surtension de la tension d'entrée UIN engendre donc un surcoût et un surencombrement particulièrement élevés. Par exemple, dimensionner le condensateur C1 pour résister à des pics de surtension pouvant atteindre jusqu'à dix fois l'amplitude nominale UIN-NOM de la tension UIN revient à sur-dimensionner le condensateur d'un facteur 100 en volume par rapport au besoin en fonctionnement normal, c'est-à-dire lorsque la tension UIN ne dépasse pas sa valeur nominale UIN-NOM.

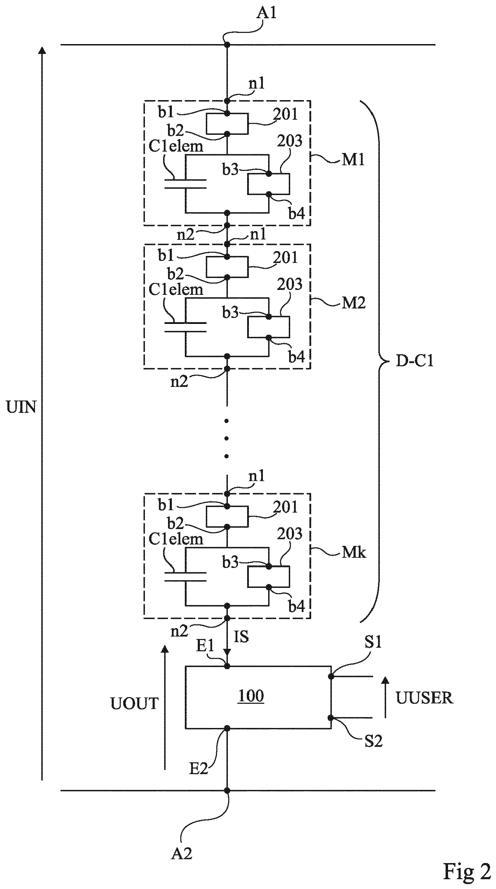

La figure 2 est un schéma électrique simplifié d'un exemple d'un circuit d'alimentation capacitive selon un mode de réalisation.

Le circuit de la figure 2 diffère du circuit de la figure 1 principalement en ce que, dans le circuit de la figure 2, le condensateur C1 de la figure 1 a été remplacé par une structure capacitive distribuée D-C1.

La structure capacitive distribuée D-C1 comprend K modules capacitifs élémentaires M1, ... MK, où K est un entier supérieur ou égal à 2. Les modules M1, ... MK sont par exemple identiques aux dispersions de fabrication près.

Chaque module Mi, avec i entier allant de 1 à K, comprend un condensateur élémentaire C1elem, un limiteur de courant 201, et un limiteur de tension 203. Le condensateur C1elem et le limiteur de courant 201 sont connectés en série entre une borne n1 et une borne n2 du module, et le limiteur de tension 203 est connecté en parallèle du condensateur C1elem. Plus particulièrement, le limiteur de courant 201 a une première borne de conduction b1 reliée, par exemple connectée, à la borne n1 du module et une deuxième borne de conduction b2 reliée, par exemple connectée à une première électrode du condensateur C1elem, une deuxième électrode du condensateur C1elem étant reliée, par exemple connectée, à la borne n2 du module. Le limiteur de tension 203 a quant à lui une première borne de conduction b3 reliée, par exemple connectée, à la première électrode du condensateur C1elem et une deuxième borne de conduction b4 reliée, par exemple connectée, à la deuxième électrode du condensateur C1elem.

Les modules M1, ... MK sont reliés en série, par leurs bornes n1 et n2, entre la borne A1 d'application de la tension alternative d'entrée UIN et la borne E1 du module de conversion de sortie 100. Plus particulièrement, dans l'exemple représenté, chaque module Mi à l'exception du module M1, a sa borne n1 reliée, par exemple connectée, à la borne n2 du module Mi-1, la borne n1 du module M1 étant reliée, par exemple connectée, à la borne A1 et la borne n2 du module MK étant reliée, par exemple connectée, à la borne E1.

La tension UIN est ainsi distribuée sur les K modules élémentaires, ce qui limite la tension vue par chaque module et permet de distribuer spatialement le champ électrique. Ceci permet d'utiliser, au sein de chaque module, des composants électroniques relativement basse tension, et par conséquent relativement peu coûteux et peu encombrants.

Dans chaque module Mᵢ, tant que la tension d'entrée UIN ne dépasse pas l'amplitude nominale UIN-NOM, le limiteur de courant 201 se comporte sensiblement comme un circuit fermé, et le limiteur de tension 203 se comporte sensiblement comme un circuit ouvert. Le module se comporte alors sensiblement comme une capacité de valeur égale à la capacité du condensateur C1elem. L'ensemble des modules placés en série forme ainsi une structure capacitive distribuée de capacité équivalente sensiblement égale à C1elem/K. Cette capacité est dimensionnée de façon à fournir le courant IS souhaité au module de conversion de sortie 100, lorsque la tension UIN est à sa valeur nominale.

Lorsque la tension d'entrée UIN dépasse un seuil TH1 prédéterminé supérieur à son amplitude nominale UIN-NOM, par exemple compris entre 10 % et 40 % de son amplitude nominale UIN-NOM, le limiteur de tension 203 de chaque module Mi se déclenche et dérive du courant de façon à limiter l'élévation de tension aux bornes du condensateur C1elem. De plus, le limiteur de courant 201 limite le courant entrant dans le module, de façon à limiter le courant traversant le limiteur de tension 203. Ainsi, le limiteur de courant 201 absorbe la majeure partie du surplus d'énergie/de tension lié à la surtension, ce qui permet de réduire d'autant la valeur maximale de tenue en tension du condensateur C1elem, et donc son coût et son encombrement. De plus, le limiteur de courant 201 contribue à limiter le pic de courant sur le courant IS en cas de surtension et/ou de forte variation (dV/dt) de la tension UIN, liées par exemple à une perturbation parasite (foudre, arc électrique, court-circuit, ouverture d'un disjoncteur, etc.). Le limiteur de courant 201 peut fonctionner de façon autonome pour réduire le courant IS voire interrompre temporairement le courant IS lorsque ce dernier dépasse un seuil de déclenchement prédéterminé. A titre de variante, le limiteur de courant 201 peut être commandé par le limiteur de tension 203 (via une liaison de commande non détaillée sur la figure 1) pour réduire le courant IS voire interrompre le courant IS lorsque le limiteur de tension 203 se déclenche.

Pendant la présence de la surtension, le limiteur de courant 201 et le limiteur de tension 203 dissipent de l'énergie sous forme de chaleur. La prévision d'une structure distribuée du type décrit en relation avec la figure 2 permet avantageusement de distribuer la dissipation de chaleur dans l'espace, et ainsi de faciliter son évacuation.

De préférence, la distance entre les condensateurs C1elem de modules voisins est supérieure ou égale à 1 cm, la distance entre les limiteurs de courant 201 de modules voisins est supérieure ou égale à 1 cm, et la distance entre les limiteurs de tension 203 de modules voisins est supérieure ou égale à 1 cm. De façon préférentielle, la distance spatiale entre deux modules Mi est d'autant plus élevée que ces modules sont électriquement éloignés l'un de l'autre, c'est-à-dire que leurs rangs i respectifs dans l'association en série sont éloignés. En effet, la différence de potentiel entre deux modules Mi est d'autant plus élevée que ces modules sont électriquement éloignés dans l'association en série de modules.

En régime nominal, c'est-à-dire en l'absence de surtension, les limiteurs de courant 201 et de tension 203 ne sont pas actifs, de sorte que le rendement de transfert de puissance entre les bornes de haute tension A1 et A2 et le module de conversion de sortie 100 est relativement élevé, par exemple supérieur à 70 %.

Dans chaque module Mᵢ, le limiteur de tension 203 est bidirectionnel en tension, de façon à pouvoir limiter la tension aux bornes du condensateur C1elem dans les deux polarités. Le limiteur de tension 203 comprend par exemple une varistance, par exemple de type MOV (de l'anglais "Metal Oxyde Varistor" - varistance métal-oxyde), ayant une première extrémité reliée, par exemple connectée, à sa borne b3 et une deuxième extrémité reliée, par exemple connectée, à sa borne b4. A titre d'exemple, la varistance peut être une varistance de type ZNR, c'est-à-dire une varistance zinc-oxyde. A titre de variante, le limiteur de tension 203 peut comprendre deux diodes Zener en série tête bêche entre sa borne b3 et sa borne b4. Dans une autre variante, le limiteur de tension 203 peut comprendre un éclateur (dispositif utilisé pour limiter les surtensions et réaliser des courts-circuits rapides au moyen d'un arc électrique provoqué par ionisation d'un gaz) ayant une première électrode reliée, par exemple connectée à sa borne b3 et une deuxième électrode reliée, par exemple connectée, à sa borne b4.

Le limiteur de courant 201 est quant à lui bidirectionnel en courant, de façon à pouvoir limiter le courant IS dans les deux polarités. A titre d'exemple, le limiteur de courant 201 comprend une résistance, une thermo-résistance ou une thermistance, ayant une première extrémité reliée, par exemple connectée, à sa borne b1 et une deuxième extrémité reliée, par exemple connectée, à sa borne b2. A titre de variante, le limiteur de courant 201 peut comprendre un fusible réarmable ayant une première borne reliée, par exemple connectée, à sa borne b1 et une deuxième borne reliée, par exemple connectée, à sa borne b2. Dans une autre variante, le limiteur de courant 201 peut comprendre un montage à transistors.

Le circuit d'alimentation capacitive de la figure 2 est particulièrement avantageux pour des applications nécessitant d'alimenter une charge de puissance relativement faible directement à partir d'un réseau électrique haute tension, par exemple un réseau monophasé ou triphasé parcouru par une tension alternative d'amplitude nominale supérieure à 10000 volts, par exemple de l'ordre de 100000 volts. Un tel circuit peut par exemple être utilisé pour alimenter des équipements électriques sur un pylône ou une ligne électrique (capteurs, relais télécom, calculateurs, drone, équipements basse consommation, par exemple de puissance inférieure à 1 kW, etc.).

A titre de variante, le circuit d'alimentation capacitive de la figure 2 peut être utilisé sous une tension d'alimentation d'entrée UIN de plus faible amplitude, par exemple d'amplitude nominale inférieure à 10000 volts, par exemple la tension secteur (d'amplitude nominale de l'ordre de 230 volts) .

Dans un exemple de réalisation, non limitatif, des électrodes (non représentées) de connexion à un dispositif extérieur peuvent être réparties spatialement sur toute la longueur de la structure capacitive distribuée, connectées respectivement aux bornes communes entre les modules Mi consécutifs de l'association en série de modules Mi. Ceci permet d'obtenir une structure capacitive adaptée à différentes plages de tension d'entrée UIN, et donc à différentes utilisations. Selon la tension d'alimentation d'entrée UIN considérée, on pourra alors prévoir de connecter la borne A1:
- soit à la borne n1 du premier module M1 de la structure, auquel cas tous les modules Mi de la structure seront exploités, ce qui est notamment adapté pour des tensions d'entrée UIN de relativement forte amplitude ;
- soit à une électrode intermédiaire entre deux modules Mi consécutifs de la structure, auquel cas seuls les modules Mi situés entre cette électrode intermédiaire et la borne n2 du module Mk seront exploités, ce qui peut être adapté pour des tensions d'entrée UIN de plus faible amplitude.

La prévision de telles électrodes intermédiaires est tout particulièrement adaptée lorsque l'on souhaite alimenter une charge, par exemple un drone à recharger, directement à partir des câbles d'une ligne haute tension. En effet, l'écartement entre deux conducteurs d'une ligne électrique est généralement d'autant plus élevé que la tension entre ces deux conducteurs est importante. Ainsi, dans le cas où les modules Mi sont disposés selon un agencement linéaire, on pourra utiliser une même structure capacitive distribuée sur différents types de lignes haute tension ayant des niveaux de tension différents et donc des écartements différents. Pour les plus hautes tensions, l'écartement entre les conducteurs étant plus important, le nombre de modules capacitifs Mi exploités sera plus important. A l'inverse, pour les tensions plus faibles, l'écartement entre les conducteurs étant réduit, le nombre de modules capacitifs Mi exploités sera plus faible.

A titre de variante, on peut prévoir de fabriquer la structure capacitive distribuée sous la forme d'un ruban que l'on vient ensuite découper en morceaux de longueurs choisies en fonction des applications considérées et en particulier des tensions d'alimentation d'entrée UIN envisagées.

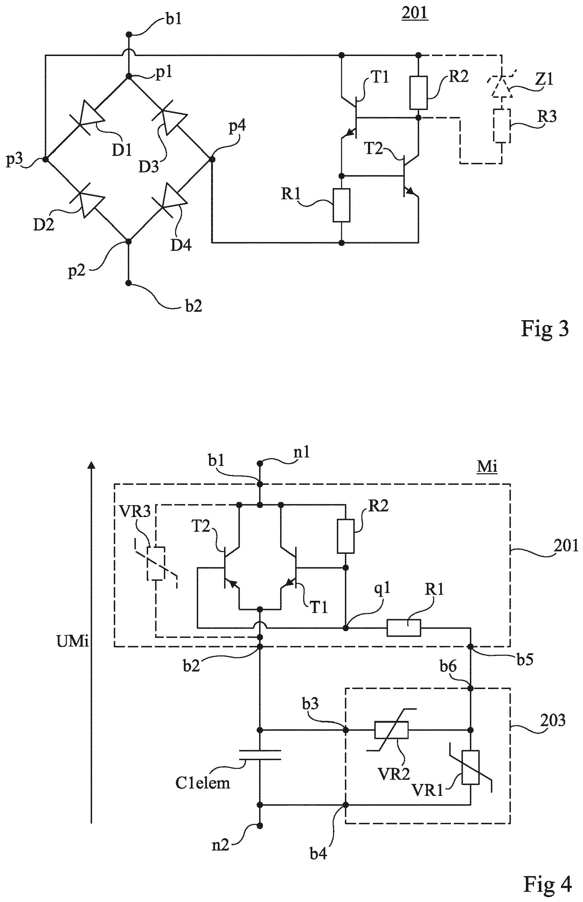

La figure 3 est un schéma électrique d'un exemple de réalisation du limiteur de courant 201 des modules Mi du circuit de la figure 2.

On notera que bien que, dans l'exemple de la figure 2, le module de conversion de sortie 100 soit connecté à une extrémité de l'association en série des modules Mᵢ, les modes de réalisation décrits ne se limitent pas à ce cas particulier. A titre de variante, le module de conversion de sortie 100 peut être intercalé entre deux modules Mi voisins quelconques de la structure capacitive distribuée D-C1.

Le limiteur de courant 201 de la figure 3 comprend un pont de redressement à diodes comportant deux noeuds d'entrée p1 et p2 reliés, par exemple connectés, respectivement aux bornes b1 et b2 du limiteur de courant, et deux noeuds de sortie p3 et p4. Plus particulièrement, dans cet exemple, le pont de redressement comprend quatre diodes D1, D2, D3 et D4. La diode D1 a son anode reliée, par exemple connectée, au noeud p1 et sa cathode reliée, par exemple connectée, au noeud p3, la diode D2 a son anode reliée, par exemple connectée, au noeud p2 et sa cathode reliée, par exemple connectée, au noeud p3, la diode D3 a son anode reliée, par exemple connectée, au noeud p4 et sa cathode reliée, par exemple connectée, au noeud p1, et la diode D4 a son anode reliée, par exemple connectée, au noeud p4 et sa cathode reliée, par exemple connectée, au noeud p2.

Le limiteur de courant 201 de la figure 3 comprend en outre, entre les noeuds p3 et p4, une première branche comportant un transistor T1 en série avec une résistance R1, et, en parallèle de la première branche, une deuxième branche comportant une résistance R2 en série avec un transistor T2. Le transistor T1 a un premier noeud de conduction relié, par exemple connecté, au noeud p3 et un deuxième noeud de conduction relié, par exemple connecté, à une première extrémité de la résistance R1, la deuxième extrémité de la résistance R1 étant reliée, par exemple connectée, au noeud p4. Le transistor T2 a un premier noeud de conduction relié, par exemple connecté, au noeud p4 et un deuxième noeud de conduction relié, par exemple connecté, à une première extrémité de la résistance R2, la deuxième extrémité de la résistance R2 étant reliée, par exemple connectée, au noeud p3. Le transistor T1 a un noeud de commande relié, par exemple connecté, au point milieu entre la résistance R2 et le transistor T2, et le transistor T2 a un noeud de commande relié, par exemple connecté, au point milieu entre le transistor T1 et la résistance R1. Les transistors T1 et T2 sont par exemple des transistors bipolaires de type NPN, le transistor T1 ayant son collecteur côté noeud p3 et son émetteur côté résistance R1, et le transistor T2 ayant son collecteur côté résistance R2 et son émetteur côté noeud p4.

La résistance R2 est par exemple très supérieure à la résistance R1, par exemple au moins dix fois supérieure à la résistance R1.

Le montage de la figure 3 régule la tension aux bornes de la résistance R1 à une valeur sensiblement égale à la tension de seuil des transistors T1 et T2, par exemple de l'ordre de 0,6 volt, de sorte que le courant entre les bornes b1 et b2 du limiteur de courant 201 reste sensiblement constant.

On notera que, dans la structure capacitive distribuée D-C1 de la figure 2, si les capacités des condensateurs C1elem et/ou les réponses des limiteurs de tension 203 des différents modules ne sont pas strictement identiques (par exemple du fait de dispersions de fabrication), les limiteurs de courant 201 peuvent ne pas tous agir exactement en même temps. Si la dispersion est faible, le courant que laisse passer le limiteur de courant du premier module Mi à être déclenché permet aux autres modules Mi de poursuivre leur montée en tension et d'atteindre rapidement leurs seuils de déclenchement respectifs. Ceci permet d'éviter qu'un unique limiteur de courant 201 ait à supporter la totalité de la surtension d'entrée. Ce processus tend à être accéléré du fait que, les limiteurs de courant n'étant pas parfaits, le courant que laisse passer le limiteur de courant du premier module Mi à être déclenché croît lorsque la tension entre les bornes b1 et b2 de ce limiteur de courant augmente.

Par exemple, dans le montage de la figure 3, en cas de déclenchement d'un module Mᵢ, la résistance R2 voit sensiblement la tension entre les bornes b1 et b2 du limiteur de courant du module, et tend à ajouter au courant régulé via la résistance R1 un courant proportionnel à la surtension du module. La résistance R2 peut par exemple être dimensionnée de façon à s'assurer que les autres modules Mi du dispositif atteignent leurs seuils de déclenchement respectifs avant que la tension aux bornes du limiteur de courant 201 du premier module à être déclenché n'atteigne un seuil critique au-delà duquel ce limiteur de courant risque d'être endommagé.

En complément, chaque limiteur de courant 201 peut comprendre son propre limiteur de tension, permettant de limiter l'élévation de tension entre ses bornes b1 et b2, de façon à protéger le limiteur de courant. Par exemple, dans le montage de la figure 3, le limiteur de courant 201 peut en outre comprendre, en parallèle de la résistance R2, une branche additionnelle (optionnelle et représentée en traits interrompus sur la figure) comportant une diode Zener Z1 en série avec une résistance R3. Dans l'exemple représenté, la diode Zener Z1 a sa cathode reliée, par exemple connectée, au noeud p3 et son anode reliée, par exemple connectée, à une première extrémité de la résistance R3, la deuxième extrémité de la résistance R3 étant reliée, par exemple connectée, au point milieu entre la résistance R2 et le transistor T2.

La figure 4 est un schéma électrique d'un exemple de réalisation d'un module capacitif élémentaire Mi du circuit de la figure 2, détaillant notamment un autre exemple de réalisation du limiteur de courant 201 et un exemple de réalisation du limiteur de tension 203.

Dans cet exemple, le limiteur de courant 201 interrompt le courant IS par ouverture d'un transistor, commandée au déclenchement du limiteur de tension 203. Pour cela, le limiteur de courant 201 comprend une borne b5 d'application d'un signal de commande, reliée, par exemple connectée, à une borne b6 de fourniture d'un signal de commande du limiteur de tension 203.

Le limiteur de courant 201 de la figure 4 comprend deux transistors T1 et T2 reliés en parallèle entre les bornes b1 et b2 du limiteur de courant. Les transistors T1 et T2 ont chacun un premier noeud de conduction relié, par exemple connecté, à la borne b1, et un deuxième noeud de conduction relié, par exemple connecté, à la borne b2. Les transistors T1 et T2 ont chacun un noeud de commande relié, par exemple connecté, à un noeud q1. Le limiteur de courant 201 comprend en outre une résistance R1 ayant une première extrémité reliée, par exemple connectée, au noeud q1 et une deuxième extrémité reliée, par exemple connectée, au noeud b5. Le limiteur de courant 201 comprend de plus une résistance R2 ayant une première extrémité reliée, par exemple connectée, à la borne b1 et une deuxième extrémité reliée, par exemple connectée, au noeud q1. A titre d'exemple, le transistor T1 est un transistor NPN ayant son collecteur côté borne b1 et son émetteur côté borne b2, et le transistor T2 est un transistor PNP ayant son collecteur côté borne b1 et son émetteur côté borne b2.

Le limiteur de tension 203 de la figure 4 comprend quant à lui deux varistances VR1 et VR2 reliées en série entre ses bornes b4 et b3, le point milieu entre les deux varistances étant relié à la borne b6. Dans l'exemple représenté, la varistance VR1 a une première extrémité reliée, par exemple connectée, à la borne b4 et une deuxième extrémité reliée, par exemple connectée, à la borne b6, et la varistance VR2 a une première extrémité reliée, par exemple connectée, à la borne b6 et une deuxième extrémité reliée, par exemple connectée, à la borne b3.

Lorsque la tension U_{Mi} entre les bornes n1 et n2 du module Mi est comprise entre les seuils d'action bas (négatif) et haut (positif) de la varistance VR1, le transistor T1 ou T2 (selon le sens du courant IS) se ferme sous l'action de la résistance R2.

Lorsque la tension U_{Mi} entre les bornes n1 et n2 du module Mi dépasse le seuil d'action haut de la varistance VR1, une différence de potentiel apparaît aux bornes de la résistance R1, ce qui crée un courant qui s'oppose au courant de polarisation induit par la résistance R2 au niveau de la base du transistor T1. Lorsque la tension U_{Mi} devient suffisamment élevée, le transistor T1 finit par s'ouvrir complètement. Le transistor T2 reste quant à lui ouvert tant que la tension U_{Mi} reste supérieure à la tension aux bornes du condensateur C1elem.

Lorsque la tension U_{Mi} passe sous le seuil bas (négatif) d'action de la varistance VR1, une différence de potentiel apparaît aux bornes de la résistance R1, ce qui crée un courant qui s'oppose au courant de polarisation induit par la résistance R2 au niveau de la base du transistor T2. Lorsque la tension U_{Mi} devient suffisamment élevée, le transistor T2 finit par s'ouvrir complètement. Le transistor T1 reste quant à lui ouvert tant que la tension U_{Mi} reste inférieure à la tension aux bornes du condensateur C1elem.

La varistance VR2, optionnelle, permet de limiter la différence de tension aux bornes de la résistance R1 et ainsi les courants de base des transistors T1 et T2 en cas de surtension positive ou négative. Elle permet par ailleurs, combinée en série avec la varistance VR1, de limiter la tension aux bornes du condensateur C1elem, par exemple si le transistor T1 ou T2 met du temps à s'ouvrir lors d'une surtension.

Le limiteur de courant 201 peut en outre comprendre une varistance optionnelle VR3, représentée en traits interrompus sur la figure 4, permettant de protéger le limiteur de courant 201 contre les surtensions et de déclencher les limiteurs de tension et de courant des autres modules Mi du circuit d'alimentation. Dans cet exemple, la varistance VR3 a une première borne reliée, par exemple connectée, à la borne b1 du limiteur de courant 201 et une deuxième borne reliée, par exemple connectée, à la borne b2 du limiteur de courant 201.

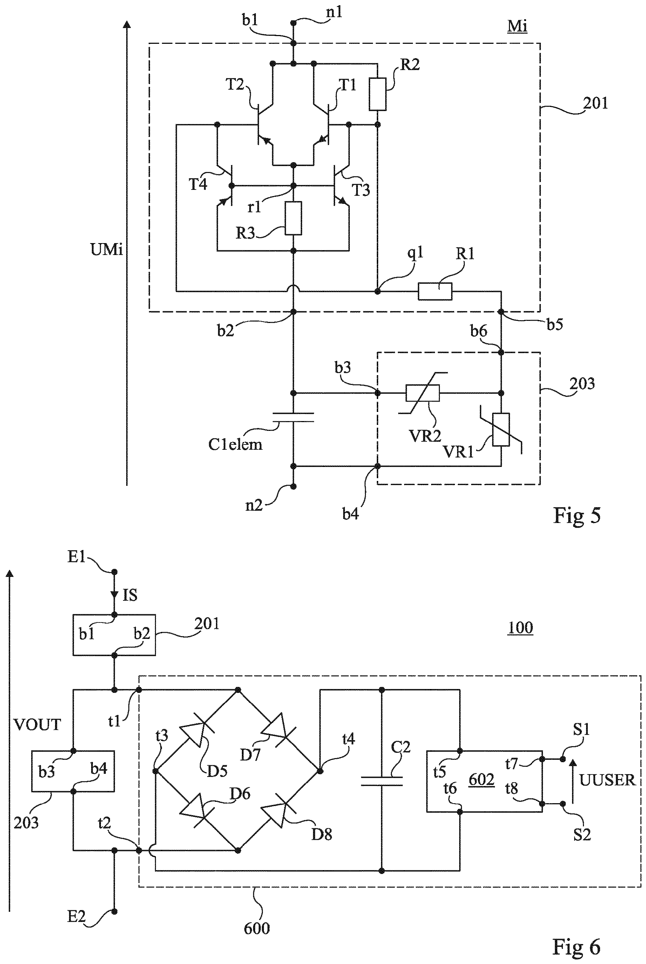

La figure 5 est un schéma électrique illustrant une variante de réalisation du module Mi de la figure 4. Le module Mi de la figure 5 comprend des éléments communs avec le module Mi de la figure 4. Par la suite, seules les différences entre les deux modules seront détaillées.

Le module Mi de la figure 5 diffère du module Mi de la figure 4 en ce que, dans l'exemple de la figure 5, les noeuds de conduction des transistors T1 et T2 opposés à la borne b1 (à savoir l'émetteur du transistor T1 et l'émetteur du transistor T2) ne sont pas connectés directement à la borne b2, mais sont connectés à un noeud r1, le module Mi comprenant en outre une résistance R3 ayant une première extrémité reliée, par exemple connectée, au noeud r1 et une deuxième extrémité reliée, par exemple connectée, à la borne b2. Le module Mi de la figure 5 comprend de plus un transistor supplémentaire T3 ayant un premier noeud de conduction relié, par exemple connecté, au noeud de commande du transistor T1 et un deuxième noeud de conduction relié, par exemple connecté, à la borne b2, et un transistor supplémentaire T4 ayant un premier noeud de conduction relié, par exemple connecté, au noeud de commande du transistor T2 et un deuxième noeud de conduction relié, par exemple connecté, à la borne b2. Les noeuds de commande des transistors T3 et T4 sont reliés, par exemple connectés, au noeud r1. A titre d'exemple, le transistor T3 est un transistor NPN ayant son collecteur côté transistor T1 et son émetteur côté borne b2, et le transistor T4 est un transistor PNP ayant son collecteur côté transistor T2 et son émetteur côté borne b2.

Dans l'exemple de la figure 5, le fonctionnement du limiteur de tension 201 est identique à ce qui a été décrit en relation avec la figure 4. Le limiteur de courant 203 a quant à lui un fonctionnement similaire à celui de la figure 3, à ceci près que, par rapport à l'exemple de la figure 3, le limiteur de courant de la figure 5 a été symétrisé pour être bidirectionnel en courant sans passer par un pont de diodes.

Bien que non représentée sur la figure 5, une varistance de protection en tension peut, comme dans l'exemple de la figure 4, être prévue entre les bornes b1 et b2 du limiteur de courant 203.

La figure 6 est un schéma électrique simplifié d'un exemple de réalisation du module de conversion de sortie 100 du circuit d'alimentation capacitive de la figure 2.

Comme l'illustre la figure 6, le module de conversion de sortie peut lui aussi comporter un limiteur de courant 201, par exemple identique ou similaire aux limiteurs de courant 201 des modules capacitifs Mᵢ, et/ou un limiteur de courant 203, par exemple identique ou similaire aux limiteurs de courant 203 des modules capacitifs Mi.

Dans l'exemple de la figure 6, le module de conversion de sortie 100 comprend un limiteur de courant 201, un limiteur de tension 203, et un circuit de conversion de sortie 600.

Le limiteur de courant 201 a sa borne b1 reliée, par exemple connectée, à la borne d'entrée E1 du module 100, et sa borne b2 reliée, par exemple connectée, à un premier noeud d'entrée t1 du circuit 600, le circuit 600 comportant un deuxième noeud d'entrée t2 relié, par exemple connecté, à la borne d'entrée E2 du module 100. Le limiteur de tension 203 a sa borne b3 reliée, par exemple connectée, au noeud t1 et sa borne b4 reliée, par exemple connectée, au noeud t2.

Dans cet exemple, le circuit 600 comprend un pont de redressement à diodes comportant deux noeuds d'entrée reliés, par exemple connectés, respectivement aux noeuds t1 et t2, et deux noeuds de sortie t3 et t4 reliés, par exemple connectés, aux bornes d'un condensateur de lissage C2. Plus particulièrement, dans cet exemple, le pont de redressement comprend quatre diodes D5, D6, D7 et D8. La diode D5 a sa cathode reliée, par exemple connectée, au noeud t1 et son anode reliée, par exemple connectée, au noeud t3, la diode D6 a sa cathode reliée, par exemple connectée, au noeud t2 et son anode reliée, par exemple connectée, au noeud t3, la diode D7 a sa cathode reliée, par exemple connectée, au noeud t4 et son anode reliée, par exemple connectée, au noeud t1, et la diode D8 a sa cathode reliée, par exemple connectée, au noeud t4 et son anode reliée, par exemple connectée, au noeud t2. Dans cet exemple, le circuit 600 comprend en outre un étage de conversion DC/DC 602 comportant des noeuds d'entrée t5 et t6 reliés, par exemple connectés, respectivement aux noeuds t4 et t3 (c'est-à-dire aux bornes du condensateur C2), et des noeuds de sortie t7 et t8 reliés, par exemple connectés, respectivement aux bornes de sortie S1 et S2 du module 100.

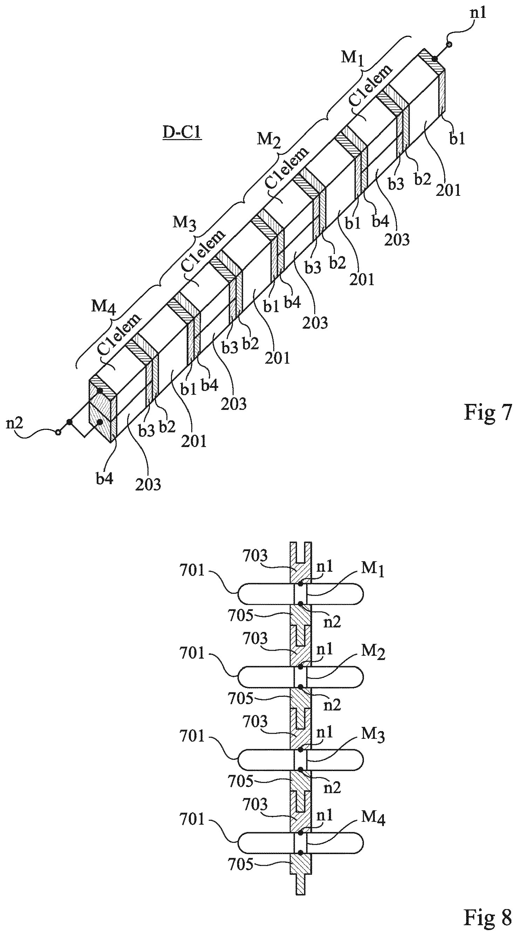

La figure 7 est une vue en perspective illustrant schématiquement un exemple d'implémentation de la structure capacitive distribuée D-C1 du circuit d'alimentation capacitive de la figure 2. Dans l'exemple représenté, la structure D-C1 comprend K=4 modules capacitifs élémentaires M1, M2, M3 et M4. Dans cet exemple, chaque module Mi est constitué de trois composants discrets correspondant respectivement au condensateur C1elem, au limiteur de courant 201, et au limiteur de tension 203. Les électrodes b1 et b2 du limiteur de courant 201 sont disposées sur deux faces opposées du composant 201, les électrodes b3 et b4 du limiteur de tension 203 sont disposées sur deux faces opposées du composant, et les électrodes du condensateur C1elem (non référencées) sont disposées sur deux faces opposées du composant. Dans chaque module Mᵢ, l'électrode b2 du limiteur de courant 201 est soudée directement à l'électrode b3 du limiteur de tension 203 et à une première électrode du condensateur C1elem. A l'interface entre deux modules voisins Mi et Mi+1, l'électrode b4 du module Mi et la deuxième électrode du condensateur C1elem du module Mi sont soudées directement à l'électrode b1 du limiteur de courant 201 du module Mi+1. Les soudures peuvent être réalisées avec un matériau de soudure rigide, ou, de préférence, avec un matériau de soudure flexible. Les modules Mi sont agencés sous forme linéique, c'est-à-dire alignés selon un même axe longitudinal. Ainsi, la distance entre les bornes A1 et E1 de la structure capacitive distribuée est sensiblement égale à K fois la longueur d'un module Mi. De plus, la distance entre deux condensateurs élémentaires C1elem de modules Mi voisins est sensiblement égale à la longueur du limiteur de courant 201 qui les sépare. L'ensemble des modules Mi peut être disposé dans une gaine isolante rigide ou flexible (non visible sur la figure), permettant d'assurer la tenue mécanique et la protection de la structure.

La figure 8 est une vue en coupe illustrant schématiquement un autre exemple d'implémentation de la structure capacitive distribuée D-C1 du circuit d'alimentation capacitive de la figure 2.

Dans cet exemple, on prévoit d'intégrer les modules capacitifs élémentaires Mi dans des dispositifs de type isolateurs. Un isolateur comprend classiquement une galette 701 en un matériau isolant, par exemple en verre ou en céramique. Une première pièce métallique d'accroche 703 est fixée à une première face (face supérieure dans l'orientation de la figure 8) de la galette, la pièce 703 ayant, vue de dessus, une surface inférieure à celle de la galette 701, par exemple au moins deux fois plus petite que celle de la galette 701, et étant disposée sensiblement au centre de la galette 701. Une deuxième pièce métallique d'accroche 705 est en outre fixée à une deuxième face (face inférieure dans l'orientation de la figure 8) de la galette 701, la pièce 705 ayant, vue de dessus, une surface inférieure à celle de la galette 701, par exemple au moins deux fois plus petite que celle de la galette 701, et étant disposée sensiblement au centre de la galette 701. Chacune des pièces métalliques d'accroche 703 et 705 peut être fixée à un conducteur ou à une pièce métallique d'accroche d'un autre isolateur ou d'un pylône.

Dans l'exemple de la figure 8, on prévoit d'intégrer chaque module Mi dans une cavité formée dans une partie centrale de la galette 701 d'un isolateur, en connectant les bornes n1 et n2 du module Mi respectivement à la pièce métallique d'accroche 703 et à la pièce métallique d'accroche 705 de l'isolateur. La structure capacitive distribuée D-C1 peut ainsi être réalisée en mettant en série K isolateurs, via leurs pièces métalliques d'accroche 703 et 705. Dans l'exemple représenté, la structure capacitive distribuée comprend K=4 modules capacitifs élémentaires M1, M2, M3 et M4 disposés respectivement dans K=4 isolateurs.

On notera par ailleurs que, de façon similaire, tout ou partie du module de conversion de sortie 100 peut être intégré dans une cavité formée dans une partie centrale de la galette 701 d'un isolateur.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, les modes de réalisation décrits ne se limitent pas aux exemples de circuits limiteurs de tension et de circuits limiteurs de tension décrits en relation avec les figures 3, 4 et 5.

De plus, les modes de réalisation décrits ne se limitent pas aux exemples d'intégration de la structure capacitive distribuée décrits en relation avec les figures 7 et 8.

## Revendications

1. Circuit d'alimentation capacitive comportant, entre des première (A1) et deuxième (A2) bornes d'application d'une tension alternative d'entrée (UIN), une structure capacitive distribuée (D-C1) comportant une pluralité de modules capacitifs élémentaires (Mᵢ) comportant chacun un limiteur de courant (201) connecté en série avec un condensateur (C1elem) entre des première (n1) et deuxième (n2) bornes du module et un limiteur de tension (203) connecté en parallèle du condensateur (C1elem), les modules capacitifs élémentaires (Mᵢ) étant reliés en série par leurs premières (n1) et deuxièmes (n2) bornes.

2. Circuit d'alimentation capacitive selon la revendication 1, comportant en outre un module de conversion de sortie (100) en série avec la structure capacitive distribuée (D-C1) entre les première (A1) et deuxième (A2) bornes d'application de la tension alternative d'entrée (UIN).

3. Circuit d'alimentation capacitive selon la revendication 1 ou 2, dans lequel la distance spatiale entre deux modules capacitifs élémentaires (Mᵢ) est d'autant plus élevée que ces modules sont électriquement éloignés l'un de l'autre, c'est-à-dire que leurs rangs respectifs dans l'association en série sont éloignés. En effet, la différence de potentiel entre deux modules Mi est d'autant plus élevée que ces modules sont électriquement éloignés dans l'association en série de modules.

4. Circuit d'alimentation capacitive selon l'une quelconque des revendications 1 à 3, dans lequel la distance entre les condensateurs (C1elem) de modules capacitifs élémentaires (Mᵢ) voisins est supérieure ou égale à 1 cm, la distance entre les limiteurs de courant (201) de modules capacitifs élémentaires (Mᵢ) voisins est supérieure ou égale à 1 cm, et la distance entre les limiteurs de tension (203) de modules capacitifs élémentaires (Mᵢ) voisins est supérieure ou égale à 1 cm.

5. Circuit d'alimentation capacitive selon l'une quelconque des revendications 1 à 4, dans lequel, dans chaque module capacitif élémentaire (Mᵢ), le limiteur de tension (203) présente un seuil de déclenchement compris entre 10 et 40 % de l'amplitude nominale de la tension alternative d'entrée (UIN).

6. Circuit d'alimentation capacitive selon l'une quelconque des revendications 1 à 5, dans lequel, dans chaque module capacitif élémentaire (Mᵢ), le limiteur de courant (201) se déclenche lorsque le courant qui le traverse dépasse un seuil prédéterminé.

7. Circuit d'alimentation capacitive selon l'une quelconque des revendications 1 à 5, dans lequel, dans chaque module capacitif élémentaire (Mᵢ), le limiteur de courant (201) est déclenché via un signal de commande généré par le limiteur de tension (203).

8. Circuit d'alimentation capacitive selon l'une quelconque des revendications 1 à 7, dans lequel, dans chaque module capacitif élémentaire (Mᵢ), le limiteur de courant (201) est bidirectionnel en courant et le limiteur de tension (203) est bidirectionnel en tension.

9. Circuit d'alimentation capacitive selon l'une quelconque des revendications 1 à 8, dans lequel, dans chaque module capacitif élémentaire (Mᵢ), le limiteur de tension (203) comprend :
- une varistance, par exemple une varistance métal-oxyde, par exemple une varistance zinc-oxyde ; ou
- une association série de deux diodes Zener tête bêche ; ou
- un montage à transistors ; ou
- un éclateur.

10. Circuit d'alimentation capacitive selon l'une quelconque des revendications 1 à 9, dans lequel, dans chaque module capacitif élémentaire (Mᵢ), le limiteur de tension (203) comprend :
- une thermo-résistance ou une thermistance ;
- un fusible réarmable ; ou
- un montage à transistors.

11. Circuit d'alimentation capacitive selon l'une quelconque des revendications 1 à 10, dans lequel, dans chaque module capacitif élémentaire (Mᵢ), le limiteur de courant (201) comprend une première branche comportant un premier transistor bipolaire (T1) et une première résistance (R1) en série entre des première (b1) et deuxième (b2) bornes de conduction du limiteur de courant (201), et, en parallèle de la première branche, une deuxième branche comportant une deuxième résistance (R2) et un deuxième transistor bipolaire (T2) en série entre les première (b1) et deuxième (b2) bornes de conduction du limiteur de courant (201), les premier (T1) et deuxième (T2) transistors bipolaires étant de même type de conductivité, le premier transistor (T1) ayant un noeud de commande relié au point milieu entre la deuxième résistance (R2) et le deuxième transistor (T2), et le deuxième transistor (T2) ayant un noeud de commande relié au point milieu entre le premier transistor (T1) et la première résistance (R1) .

12. Circuit d'alimentation capacitive selon l'une quelconque des revendications 1 à 11, dans lequel, dans chaque module capacitif élémentaire (Mᵢ), le limiteur de courant (201) comprend des premier (T1) et deuxième (T2) transistors bipolaires de types de conductivité opposés connectés en série entre des première (b1) et deuxième (b2) bornes de conduction du limiteur de courant (201), le premier transistor (T1) ayant une borne de commande connectée à une borne de commande du deuxième transistor (T2), les bornes de commande des premier (T1) et deuxième (T2) transistors étant reliées d'une part à une borne de commande (b5) du limiteur de courant par l'intermédiaire d'une première résistance (R1) et d'autre part à la première borne de conduction du limiteur de courant (201) par l'intermédiaire d'une deuxième résistance (R2).

13. Circuit d'alimentation capacitive selon la revendication 12, dans lequel, dans chaque module capacitif élémentaire (Mᵢ), le limiteur de tension comprend des première (VR1) et deuxième (VR2) varistances en série entre des première et deuxième électrodes du condensateur (C1elem), le point milieu entre les première (VR1) et deuxième (VR2) varistances étant connecté à la borne de commande (b5) du limiteur de courant (201).

14. Circuit d'alimentation capacitive selon l'une quelconque des revendications 1 à 13, dans lequel chaque module capacitif élémentaire (Mᵢ) est constitué de trois composants discrets correspondant respectivement au condensateur (C1elem), au limiteur de courant (201), et au limiteur de tension (203), les modules capacitifs élémentaires (Mᵢ) étant agencés sous forme linéique de façon que les condensateurs (C1elem) de deux modules capacitifs élémentaires (Mᵢ) voisins quelconques soient séparés par le limiteur de courant (201) de l'un des deux modules, et de façon que les limiteurs de tension (203) de deux modules capacitifs élémentaires (Mᵢ) voisins quelconques soient séparés par le limiteur de courant (201) de l'un des deux modules.

15. Circuit d'alimentation capacitive selon la revendication 14, dans lequel les modules capacitifs élémentaires (Mᵢ) sont disposés dans une même gaine isolante de protection.

16. Circuit d'alimentation capacitive selon l'une quelconque des revendications 1 à 15, dans lequel la structure capacitive distribuée comprend une pluralité d'isolateurs comprenant chacun une galette (701) en un matériau isolant, une première pièce métallique d'accroche (703) fixée à une première face de la galette, et une deuxième pièce métallique d'accroche (705) fixée à une deuxième face de la galette, les isolateurs étant reliés en série par leurs première (703) et deuxième pièces métalliques d'accroche (705), et chaque module capacitif élémentaire (Mᵢ) étant disposé dans une cavité formée dans la galette de l'un des isolateurs et ayant ses première (n1) et deuxième (n2) bornes en contact respectivement avec les première (703) et deuxième (705) pièces métalliques d'accroche de l'isolateur.
